Europäisches Patentamt

**European Patent Office**

Office européen des brevets

(19)

(11) Veröffentlichungsnummer : **0 139 198**
**B1**

(12) **EUROPÄISCHE PATENTSCHRIFT**

(45) Veröffentlichungstag der Patentschrift :
11.11.87

(51) Int. Cl.⁴ : **G 01 B   3/04**

(21) Anmeldenummer : **84110657.8**

(22) Anmeldetag : **07.09.84**

(54) **Massstab.**

(30) Priorität : **10.09.83 DE 3332757**
**02.02.84 DE 8402921 U**

(43) Veröffentlichungstag der Anmeldung :
**02.05.85 Patentblatt 85/18**

(45) Bekanntmachung des Hinweises auf die Patenterteilung : **11.11.87 Patentblatt 87/46**

(84) Benannte Vertragsstaaten :
**FR GB IT**

(56) Entgegenhaltungen :
**DE-A- 2 019 453**
**US-A- 4 089 116**
**Zeichenbedarf Schiller, Bürozentrum Schulz, Katalog**
**1981, Seite 2/11**

(73) Patentinhaber : **Rust, Günter**
**Stümpenäcker 5**
**D-7141 Oberriexingen (DE)**

(72) Erfinder : **Rust, Günter**
**Stümpenäcker 5**
**D-7141 Oberriexingen (DE)**

(74) Vertreter : **Schmid, Berthold**
**Patentanwälte Dipl.-Ing. B. Schmid Dr. Ing. G. Birn**
**Dipl.-Phys. H. Quarder Falbenhennenstrasse 17**
**D-7000 Stuttgart 1 (DE)**

## Beschreibung

Die vorliegende Erfindung betrifft einen für Zeichenmaschinen od. dgl. geeigneten Maßstabsatz, der aus zwei feststehend miteinander verbundenen und einen vorzugsweise rechten Winkel einschließenden Maßstäben besteht.

Zeichenmaschinen sind im allgemeinen mit einem schwenkbaren Zeichenkopf (siehe z. B. Zeichenbedarf Schiller-Bürozentrum Schule : Katalog 1981, Seite 2/11) ausgestattet, der entweder an einem mit einem Gewichtsausgleich versehenen Gestell oder dem Laufwagen einer Zeichenmaschine angeordnet ist und zwei im allgemeinen senkrecht zueinander stehende Maßstäbe trägt. Diese beiden Maßstäbe sind dabei an an dem schwenkbaren Zeichenkopf angeordneten Tragarmen befestigt. Um jedoch zwischen diesen Tragarmen und den dem Zeichenkopf zugekehrten Enden der beiden Maßstäbe eine lösbare, dennoch aber justierbare Verbindung zu schaffen, sind sowohl an der Unterseite als auch an der Oberseite jedes dem Zeichenkopf zugekehrten Maßstabendes besondere Beschläge angeordnet, die den ihnen gegenüberstehenden Aufnahmen der Zeichenkopftragarme angepaßt sind und satt in dieselben eingreifen. Die Justierung dieser Maßstäbe erfolgt dabei dadurch, daß die Beschläge gegenüber der Oberfläche bzw. der Unterfläche des betreffenden Maßstabendes leicht geschwenkt und sodann mittels Klemmschrauben fixiert werden. Mittels derartiger den Zeichenkopftragarmen zugeordneter Beschläge ist zwar ein sicherer Sitz und auch eine einwandfreie Justierung der Maßstäbe zueinander möglich, jedoch ist diese Art der Verbindung der Maßstäbe mit dem Zeichenkopf immer noch außerordentlich umständlich und auch insofern teuer, als diese Beschläge von den Herstellern der Zeichenköpfe gefertigt werden und jeweils unter Angabe des Fabrikates des betreffenden Zeichenkopfes den Maßstabherstellern zugeleitet werden, die dann die Befestigung der beiderseitigen Beschläge an den Maßstäben vornehmen.

Aufgabe der vorliegenden Erfindung ist es, diese oben aufgezeigten Schwierigkeiten zu beseitigen und einen Maßstabsatz zu schaffen, der unabhängig von dem jeweils vorgesehenen Zeichenkopf justierbar ist.

Diese Aufgabe wird erfindungsgemäß dadurch gelöst, daß die beiden Maßstäbe lösbar miteinander verbunden sind durch ein an dem Zeichenkopf einer Zeichenmaschine zu befestigendes steifes Zwischenstück, das ein Mittelstück und zwei an diesem angeformte Tragarme aufweist, die den gleichen zwischen den beiden Maßstäben befindlichen Winkel einschließen und formschlüssig und lösbar in in den ihnen zugekehrten beiden Enden der Maßstäbe eingearbeitete rinnenartige Ausnehmungen, z. B. Längsnuten eingreifen.

Ein solches die beiden Maßstäbe miteinander verbindendes Zwischenstück läßt sich dabei maschinell in großen Stückzahlen und auch so exakt fertigen, daß der Winkel, den die beiden Tragarme einschließen, jeweils völlig mit dem Winkel übereinstimmt, den nach der Montage der Maßstäbe auch diese selbst einschließen sollen. Ein solches Zwischenstück ist dabei zweckmäßig von dem Hersteller der Maßstäbe anzufertigen und zu vertreiben. Eine sichere und formschlüssige Verbindung der beiden Maßstäbe mittels dieses Zwischenstückes ist dabei dadurch gewährleistet, daß die an dem Mittelstück angeformten Tragstäbe jeweils satt und paßgenau in die in den ihnen gegenüberstehenden Enden der beiden Maßstäbe eingearbeiteten rinnenartigen Ausnehmungen oder Längsnuten eingreifen. Da somit die beiden Maßstäbe den gleichen Winkel wie auch die Tragarme einschließen, ist eine besondere Nachjustierung dieser beiden Maßstäbe zueinander überhaupt nicht mehr notwendig.

Bei dieser Verbindung zwischen den Tragarmen dieses Mittelstückes und den ihnen zugekehrten Enden der Maßstäbe ist der Querschnitt der rinnenartigen Ausnehmungen oder Längsnuten vorteilhaft nahezu gleich dem Querschnitt der Tragarme. Auch können die Querschnitte sowohl der Tragarme als auch der rinnenartigen Ausnehmungen oder Längsnuten trapezförmig oder auch schwalbenschwanzförmig sein. Diese rinnenartigen Ausnehmungen oder auch Längsnuten sind dabei vorteilhaft in der Unterseite der Maßstabsenden eingeformt und so bemessen, daß ihre Tiefe gleich oder etwas größer ist als die Stärke der Tragarme. Durch diese Maßnahme ist gewährleistet, daß zwischen der Oberfläche der zu bearbeitenden Zeichnung und der Unterseite der Tragarme noch ein ausreichender Luftspalt vorhanden ist und somit eine Berührung oder gar eine Beschädigung der Oberfläche der Zeichnung durch diese Tragarme nicht zu befürchten ist.

Zur Verbindung der Maßstäbe mit den Tragarmen sind zweckdienlich Schrauben vorgesehen, deren Köpfe jeweils an der Oberseite der Maßstabenden anliegen und deren Gewindeschäfte durch in den Maßstabenden befindliche Bohrungen hindruchgreifen und in in den Tragarmen eingearbeitete Gewindebohrungen eingeschraubt sind.

Um eine einfache und sichere Montage dieses Zwischenstückes an dem schwenkbaren Teil des Zeichenkopfes zu erreichen, ist es von Vorteil, wenn das Mittelstück beispielsweise als Lasche od. dgl. ausgebildet und gegenüber den Tragarmen schräggestellt ist, wobei dann die Längsachsen dieses Mittelstückes und der beiden Tragarme vorteilhaft jeweils einen Winkel von etwa 120° bis 150° einschließen.

Weitere Einzelheiten der vorliegenden Erfindung ergeben sich aus der folgenden Beschreibung einer auf der Zeichnung dargestellten beispielsweisen Ausführungsform.

Es zeigen :

Fig. 1 die teilweise Draufsicht eines Maßstabsatzes und

Fig. 2 einen Querschnitt gemäß der Linie A-B.

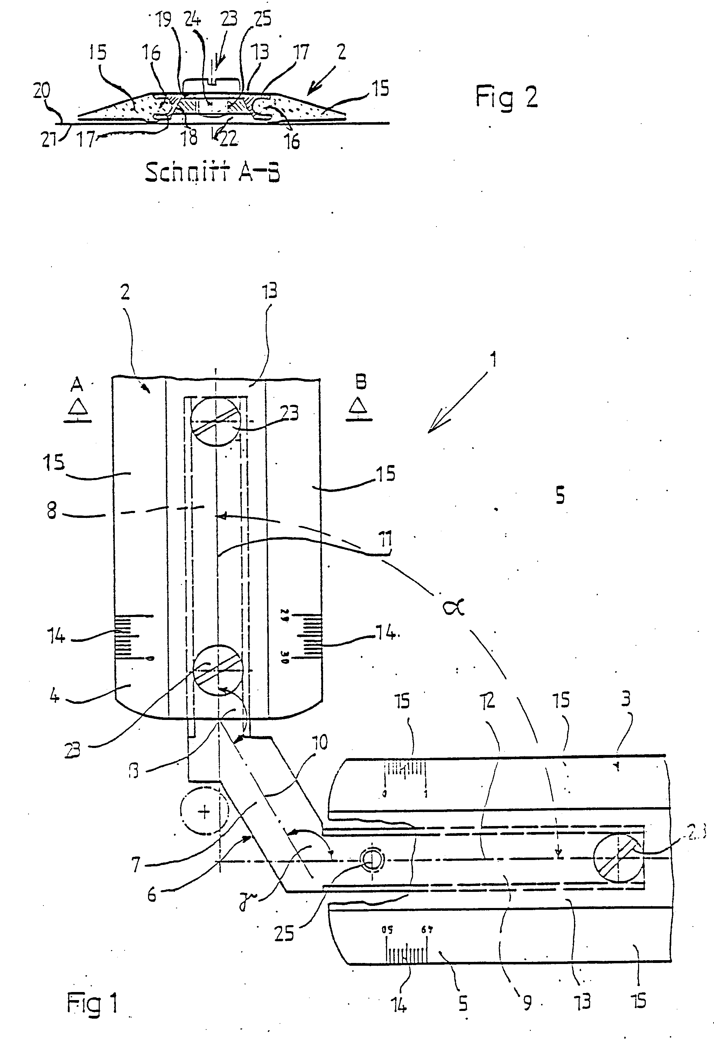

Der in der Fig. 1 teilweise in der Draufsicht dargestellte Maßstabsatz 1 weist zwei einen Winkel α von 90° einschließende Maßstäbe 2 und 3 auf, deren einander zugekehrte Enden mit 4 und 5 bezeichnet sind. Zur Verbindung dieser beiden Maßstabenden 4 und 5 ist ein zum Maßstabsatz 1 gehöriges Zwischenstück 6 vorgesehen, das aus einem ausreichend steifen und formstabilen Material gefertigt ist. Dieses Zwischenstück 6 weist ein schrägstehendes Mittelstück 7 auf, das jeweils in einen mit 8 bzw. 9 bezeichneten Tragarm ausläuft. Die Längsachse 10 des Mittelstückes 7 schließt dabei mit der Längsachse 11 des Tragarmes 8 einen Winkel β von 150° und mit der Längsachse 12 des Tragarmes 9 einen Winkel γ von 120° ein. Im übrigen ist dieses Mittelstück 7 so gestaltet, daß es einfach und sicher von der Unterseite her in eine in dem verschwenkbaren Teil eines nicht besonders dargestellten Zeichenkopfes befindliche Aufnahme hineinragt und mit derselben zu verriegeln ist.

Wie insbesondere aus dem in der Fig. 2 dargestellten Schnitt A-B ersichtlich ist, so besteht jeder der beiden Maßstäbe 2 und 3 aus einem sich über die gesamte Stablänge erstreckenden Mittelteil 13 und zwei an diesem Mittelteil 13 angeordneten, beispielsweise aus Kunststoff gefertigten und jeweils eine Maßstabsskala 14 aufweisenden Skalenträgern 15. Diese beiden Skalenträger 15 greifen jeweils mit ihren dem Mittelteil 13 zugekehrten Längskanten 16 in eine gegenüberliegende, in dem Mittelteil 13 befindliche und zur Seite hin offene Längsnut 17 ein, die eine im Querschnitt kreisförmige Hinterschneidung aufweist. Darüber hinaus weist dieser zweckmäßig aus einem Leichtmetall bestehende Mittelteil 13 eine unten offene und sich ebenfalls über die gesamte Stablänge erstreckende rinnen- oder nutartige Ausnehmung 18 auf, wobei der durch diese Ausnehmung 18 gebildete, die beiden Seitenteile des Maßstabmittelteiles 13 miteinander verbindende Steg 19 stark geschwächt ist und eine Stärke hat, die wesentlich geringer ist als die Stärke des Mittelteiles 13.

Diese rinnen- oder nutartigen Ausnehmungen 18 haben dabei jeweils einen trapezförmigen, sich nach unten hin erweiternden Querschnitt, der wieder gleich dem Querschnitt der beiden Tragarme 8 und 9 ist. Die Stärke dieser Tragarme 8 und 9 ist dabei aber derart geringer als die Tiefe dieser Ausnehmungen 18, daß, wenn die Maßstäbe 2 und 3 auf die Oberfläche 20 einer Zeichnung 21 od. dgl. gelegt werden, zwischen dieser und den Unterseiten der Tragarme 8 und 9 noch jeweils ein Zwischenraum 22 verbleibt.

Zur Befestigung dieser beiden in die Ausnehmungen 18 einzulegenden Tragarme 8 und 9 mit den Maßstabenden 4 und 5 sind jeweils zwei mit 23 bezeichnete Schrauben vorgesehen, deren Gewindeschäfte 24 jeweils durch eine in dem Mittelstück 13 befindliche Bohrung hindurchgreifen und in in den Tragarmen 8 und 9 eingearbeitete Gewindebohrungen 25 eingeschraubt sind. Werden diese Verbindungsschrauben 23, deren Köpfe jeweils an der Oberfläche der Mittelstücke 13 anliegen, fest angezogen, so werden hierdurch die beiden Tragarme 8 und 9 satt in die rinnenartige Ausnehmung 18 hineingezogen, wodurch nicht nur eine feste und starre Verbindung, sondern auch eine sichere Justage der Maßstäbe 1 und 2 gegenüber den Tragarmen 8 und 9 des Zwischenstückes 6 gewährleistet ist.

**Patentansprüche**

1. Maßstabsatz für Zeichenmaschinen od. dgl., bestehend aus zwei feststehend miteinander verbundenen und einen vorzugsweise rechten Winkel einschließenden Maßstäben, wobei die beiden Maßstäbe (2, 3) lösbar miteinander verbunden sind durch ein an dem Zeichenkopf der Zeichenmaschine zu befestigendes steifes Zwischenstück (6), das ein Mittelstück (7) und zwei an diesem angeformte Tragarme (8, 9) aufweist, die den gleichen zwischen den beiden Maßstäben (2, 3) befindlichen Winkel (α) einschließen und formschlüssig und lösbar in in den ihnen zugekehrten beiden Enden (4, 5) der Maßstäbe (2, 3) eingearbeitete rinnenartige Ausnehmungen (18), wie z. B. Längsnuten, eingreifen.

2. Maßstabsatz nach Anspruch 1, dadurch gekennzeichnet, daß der Querschnitt der rinnenartigen Ausnehmungen (18) nahezu gleich dem Querschnitt der Tragarme (8, 9) ist.

3. Maßstabsatz nach Anspruch 1 und/oder 2, dadurch gekennzeichnet, daß der Querschnitt der Tragarme (8, 9) und der rinnenartigen Ausnehmungen (18) trapezförmig oder auch schwalbenschwanzförmig ist.

4. Maßstabsatz nach einem oder mehreren der Ansprüche 1 bis 3, dadurch gekennzeichnet, daß die rinnenartigen Ausnehmungen (18) in der Unterseite der Maßstabenden (4, 5) eingeformt sind.

5. Maßstabsatz nach einem oder mehreren der Ansprüche 1 bis 4, dadurch gekennzeichnet, daß die Stärke der Tragarme (8, 9) gleich oder kleiner ist als die Tiefe der rinnenartigen Ausnehmungen (18).

6. Maßstabsatz nach einem oder mehreren der Ansprüche 1 bis 5, dadurch gekennzeichnet, daß die Maßstäbe (2, 3) mit den Tragarmen (8, 9) des Zwischenstückes (6) mittels Schrauben (23) verbunden sind, deren Köpfe jeweils an der Oberseite der Maßstäbe (2, 3) anliegen und deren Gewindeschäfte (24) durch in den Maßstäben (2, 3) befindliche Bohrungen hindurchgreifen und in in den Tragarmen (8, 9) eingearbeitete Gewindebohrungen (25) eingeschraubt sind.

7. Maßstabsatz nach Anspruch 1, dadurch gekennzeichnet, daß das Mittelstück (7) als Lasche ausgebildet und gegenüber den Tragarmen (8, 9) schräggestellt ist.

**Claims**

1. Set of measuring rulers for draughting machines or the like, consisting of two straightedges connected firmly to each other and preferably enclose a right-angle between them, the two straightedges or measuring rulers (2, 3) being connected to each other in a separable manner by a rigid intermediate member (6) adapted to be fixed on the drawing head of the draughting machine and which comprises a middle piece (7) and, fitted thereon, two support arms (8, 9) which subtend the same angle (α) as is contained between the two measuring rulers (2, 3), engaging in form-locking and separable manner in channel-like recesses (18), such as for instance longitudinal slots, machined into the ends (4, 5) of the measuring rulers (2, 3) which face them.

2. Set of measuring rulers according to Claim 1, characterised in that the cross-section of the channel-like recesses (18) is approximately equal to the cross-section of the support arms (8, 9).

3. Set of measuring rulers according to Claim 1 and/or 2, characterised in that the cross-section of the support arms (8, 9) and of the channel-like recesses (18) is trapezoidal or dovetailed.

4. Set of measuring rulers according to one or more of Claims 1 to 3, characterised in that the channel-like recesses (18) are formed in the underside of the ends (4, 5) of the measuring rulers.

5. Set of measuring rulers according to one or more of Claims 1 to 4, characterised in that the thickness of the support arms (8, 9) is equal to or is less than the depth of the channel-like recesses (18).

6. Set of measuring rulers according to one or more of Claims 1 to 5, characterised in that the measuring rulers (2, 3) are connected to the support arms (8, 9) of the intermediate piece (6) by means of screws (23), the heads of which bear in each case on the upper face of the measuring rulers (2, 3) and of which the threaded shanks (24) engage through bores provided in the measuring rulers (2, 3) and are screwed into screwthreaded bores (25) machined in the support arms (8, 9).

7. Set of measuring rulers according to Claim 1, characterised in that the middle piece (7) is constructed as a tie bar and is oblique in relation to the support arms (8, 9).

**Revendications**

1. Jeu de règles graduées pour appareils à dessiner, ou analogues, formé de deux règles graduées reliées entre elles de façon fixe et faisant entre elles un angle de préférence droit, les deux règles (2, 3) étant reliées entre elles de façon détachable par une pièce intermédiaire rigide (6) à fixer au bouton de réglage de l'appareil à dessiner, qui présente une pièce centrale (7) et deux bras porteurs (8, 9) formés sur celle-ci, qui font entre eux le même angle (α) qui se trouve entre les deux règles (2, 3) et s'engagent par encastrement et de façon détachable dans des évidements (18) similaires à des gorges, comme, par exemple, des rainures longitudinales, ménagés dans les deux extrémités (4, 5) des règles (2, 3) qui sont tournées vers ces bras.

2. Jeu de règles selon la revendication 1, caractérisé en ce que la section des évidements (18) similaires à des gorges est à peu près semblable à la section des bras porteurs (8, 9).

3. Jeu de règles selon la revendication 1 et/ou la revendication 2, caractérisé en ce que la section des bras porteurs (8, 9) et des évidements (18) similaires à des gorges est trapézoïdale ou encore en queue d'aronde.

4. Jeu de règles selon une ou plusieurs des revendications 1 à 3, caractérisé en ce que les évidements similaires à des gorges (18) sont formés dans le côté inférieur des extrémités (4, 5) des règles.

5. Jeu de règles selon une ou plusieurs des revendications 1 à 4, caractérisé en ce que l'épaisseur des bras porteurs (8, 9) est égale ou inférieure à la profondeur des évidements (18) similaires à des gorges.

6. Jeu de règles selon une ou plusieurs des revendications 1 à 5, caractérisé en ce que les règles (2, 3) sont reliées aux bras porteurs (8, 9) de la pièce intermédiaire (6) au moyen de vis (23) dont les têtes s'appliquent chacune contre le côté supérieur des règles (2, 3) et dont les tiges filetées (24) passent à travers des perforations situées dans les règles (2, 3) et sont vissées dans des trous filetés (25) pratiqués dans les bras porteurs (8, 9).

7. Jeu de règles selon la revendication 1, caractérisé en ce que la pièce centrale (7) est conçue sous forme de languette et est placée obliquement par rapport aux bras porteurs (8, 9).

Fig 2

Schnitt A-B

Fig 1